## Europäisches Patentamt

## European Patent Office

## Office européen des brevets

(19)

(11) Veröffentlichungsnummer: **0 109 957**

**B1**

(12) # EUROPÄISCHE PATENTSCHRIFT

(45) Veröffentlichungstag der Patentschrift:
18.05.88

(51) Int. Cl.⁴: **F 02 C 5/12**

(21) Anmeldenummer: **83890184.1**

(22) Anmeldetag: **18.10.83**

(54) **Impulsgesteuerte Gasturbine.**

(30) Priorität: 27.10.82 AT 3937/82

(43) Veröffentlichungstag der Anmeldung:
30.05.84 Patentblatt 84/22

(45) Bekanntmachung des Hinweises auf die Patenterteilung:
18.05.88 Patentblatt 88/20

(84) Benannte Vertragsstaaten:
CH DE FR GB IT LI SE

(56) Entgegenhaltungen:
DE-A-1 960 578
DE-A-2 229 582
FR-A-2 191 022
NL-C-1 657
US-A-2 557 198

(73) Patentinhaber: **Lorenz, Edmund, Hangweg 2, A-8401 Kalsdorf (AT)**

(72) Erfinder: **Lorenz, Edmund, Hangweg 2, A-8401 Kalsdorf (AT)**

(74) Vertreter: **Puchberger, Georg, Dipl.- Ing., Patentanwälte Dipl.- Ing. Georg Puchberger Dipl.- Ing. Rolf Puchberger Dipl.- Ing. Peter Puchberger Singerstrasse 13 Postfach 55, A-1010 Wien (AT)**

EP 0 109 957 B1

**Beschreibung**

Die Erfindung betrifft eine impulsgesteuerte Gasturbine, die mindestens eine mit Einspritzdüsen versehene Brennkammer aufweist, in der in periodischen Abständen elektronisch gesteuerte Ladung, Verbrennung und Expansion von Treibmittel aufeinander folgen, wobei durch eine Leitapparat-Laufrad-Kombination und ein gesteuertes und über einen Antrieb betätigtes Einlaßsystem eine annähernd isochore Verbrennungscharakteristik gegeben ist, wobei gegenüber dem vor dem Einlaßsystem herrschenden Druck beim Ladevorgang ein Unterdruck in der Brennkammer durch Drehung des Laufrade erzeugt wird und das Treibmittel vor dem Einlaßsystem über ein Gebläse und einen Wärmetauscher eingebracht wird.

Eine solche Gasturbine ist z. B. durch die DE-A-2 229 582 bekannt geworden. Bei dieser bekannten Verbrennungsturbine werden Pilzventile als Brennkammereinlaß verwendet, was Strömungsverluste mit sich bringt. Das gegenläufige Laufradpaar mit gleicher Schaufelzahl ergibt eine Bremswirkung. Es ist fernerhin kein Nachverbrennungsraum vorhanden, wodurch ein erhöhter Schadstoffausstoß sowie mehr Treibstoffverbrauch bedingt ist. Es findet bei der bekannten Turbine auch keine mehrfache Ausdehnung der Luft statt, was einen Leistungsverlust mit sich bringt. Endlich liegt in nachteiliger Weise ein großer konstruktiver Aufwand vor, wodurch das Gewicht der Turbine erhöht wird.

Die Erfindung stellt sich die Aufgabe alle oben genannten Nachteile zu vermeiden und den Wirkungsgrad weiterhin zu verbessern.

Diese Aufgabe wird erfindungsgemäß in erster Linie dadurch gelöst, daß das Einlaßsystem eine mit Schlitzen versehene Ventilscheibe umfaßt, welche relativ zu einem mit Schlitzen versehenen Stator eingangs der Brennkammer mit einer Welle drehbar und axial abhebbar ist und daß zwischen dem Antrieb und der Ventilscheibe eine Rutschkupplung vorgesehen ist, wobei bei Unterdruck in der Brennkammer gegenüber dem vor dem Einlaßsystem herrschenden Druck Kraftschluß der Rutschkupplung mit dem Antrieb besteht und die Schlitze der Ventilscheibe mit den Schlitzen des Stators in Überdeckung gelangen und das Einlaßsystem zur Ladung der Brennkammer geöffnet ist, wohingegen bei Überdruck in der Brennkammer gegenüber dem vor dem Einlaßsystem herrschenden Druck die Ventilscheibe gegen den Stator gedrückt ist, wodurch die Rutschkupplung gelöst ist und die Schlitze der Ventilscheibe mit den Stegen des Stators zur Deckung gebracht sind, und daß die Steuerung über eine auf der gleichen Welle befindliche Nutenscheibe erfolgt, welche die Impulse turbinendrehzahlabhängig für eine den Einspritzzeitpunkt, die Einspritzdauer und den Zündzeitpunkt steuernde Elektronik liefert.

In der Zeichnung ist der Gegenstand der Erfindung in einigen Ausführungsformen beispielsweise dargestellt. Die Zeichnungen sind schematisch gehalten.

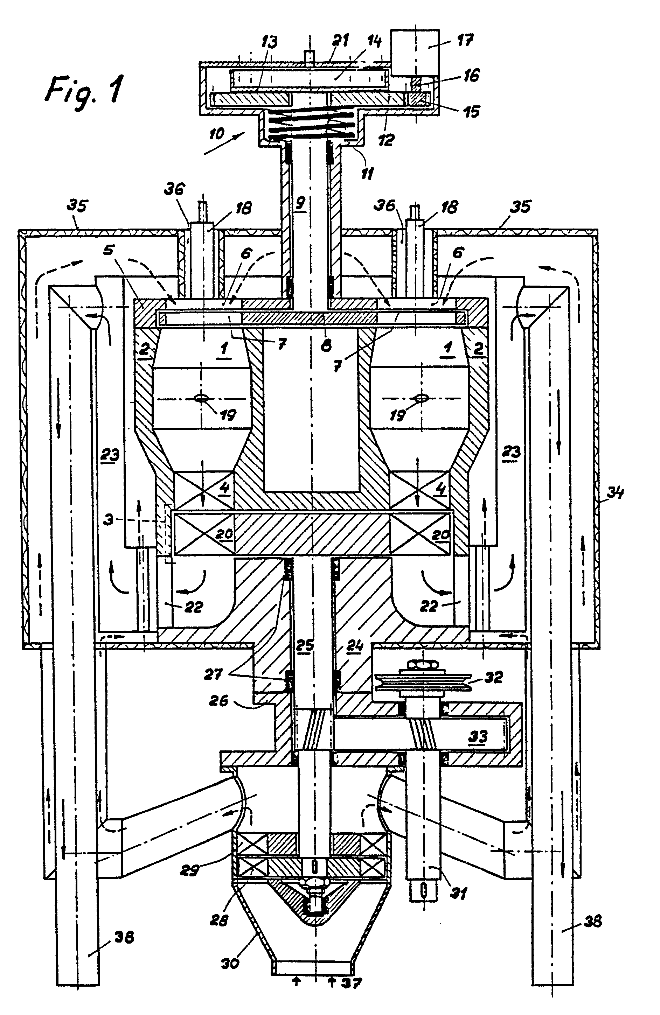

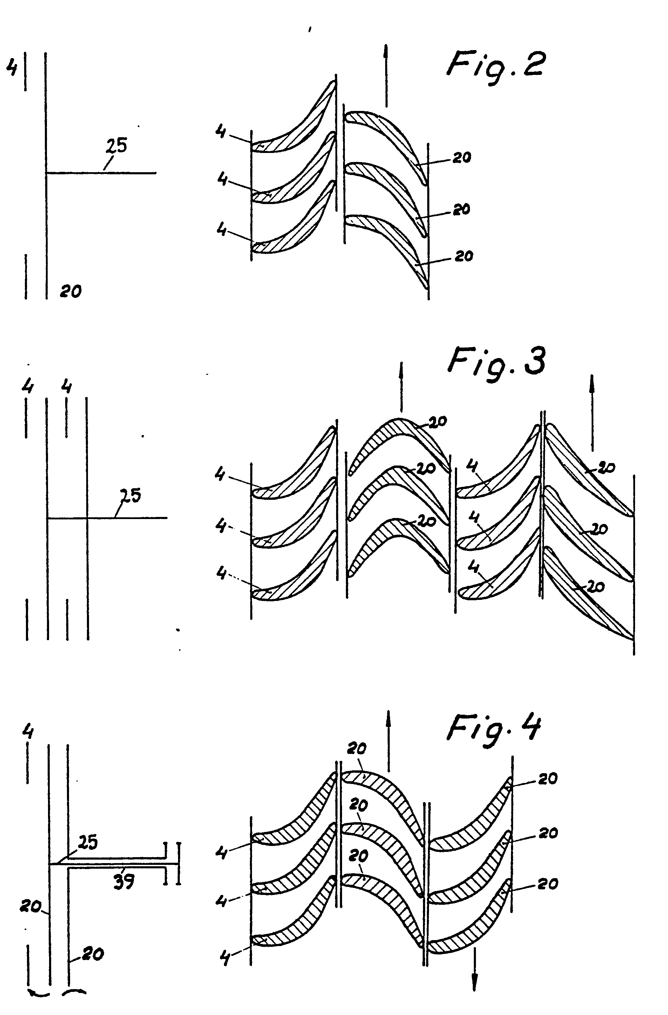

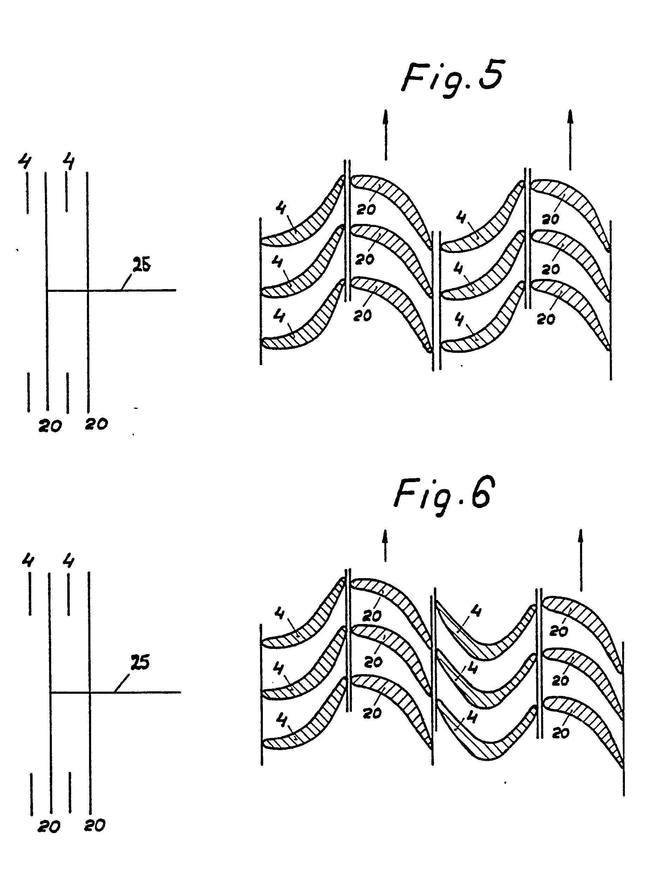

Fig. 1 zeigt eine Gesamtübersicht über die erfindungsgemäße impulsgesteuerte Gasturbine. In den Fig. 2 bis 6 sind in jeweils einander zugeordneten Darstellungen verschiedene Leitapparat-Laufrad-Kombinationen veranschaulicht.

Um das Verständnis der Erfindung zu erleichtern, sei vorerst das bevorzugte Ausführungsbeispiel nach Fig. 1 wie folgt erklärt.

Das Gehäuse der Brennkammer 1 besteht aus einem geformten hohlzylindrischen äußeren Mantel 2, der mit der Radkammer 3 verbunden ist.

Der innere Mantel der Brennkammer 1 weist eine zum äußeren Mantel spiegelverkehrte Form auf. Der einen Leitschaufelkranz aufweisende Leitapparat 4 ist am äußeren Radkammermantel 2 befestigt.

An der Stirnwand der Brennkammer 1 befindet sich ein Stator 5, der mit Schlitzen 6 versehen und verschraubt angebracht ist. Vor dem Stator 5, und zwar in die Brennkammer ragend, ist die drehende bzw. pendelnde ebenfalls mit Schlitzen 7 versehene Ventilscheibe 8 axial abhebbar angebracht. Befestigt ist diese Scheibe auf einer Welle 9, die abgedichtet aus dem Wärmetauscher geführt wird.

Am anderen Ende dieser Welle 9 sitzt die Rutschkupplung 10, die aus Druckfeder 11, sowie Zahnrad 12 samt Reibbelag 13 besteht. Dieser vorgelagert ist die für die elektronische Steuerung notwendige Nutenscheibe 14. Übersetzt wird die Rutschkupplung 10 mit einem Ritzel 15, das sich auf der drehzahlregelbaren Gleichstrommotorwelle 16 befindet. Der Elektromotor 17 ist am äußeren Gehäuse 21 der Rutschkupplung 10 fixiert.

Im Stator 5 sind stirnseitig vier elektronisch gesteuerte, mit einem Medium gekühlte Einspritzdüsen 18 angebracht.

Im äußeren Brennkammermantel 2 sind entweder Glüh- oder Zündkerzen 19 fixiert, die in das Innere der Brennkammer 1 ragen. Hinter dem Leitapparat 4 befindet sich der Laufapparat 20.

Nach dem Laufapparat führen die Auspuffgase durch radial angeordnete Öffnungen 22, die sich in der Radkammer befinden, in den Nachverbrennungsraum 23.

Das Turbinenrad 20 sitzt am vorderen Ende einer Ritzelwelle 25, die im Ritzellagerflansch 24, der an der vorderen Stirnseite des Getriebegehäuses 26 angeflanscht ist, gelagert und durch ein Labyrinth 27 abgedichtet ist.

Auf der verlängerten Ritzelwelle befindet sich das Laufrad 28 des Ladegebläses. Dem nachgeschaltet ist ein Leitapparat 29, der sich im Inneren des Gebläsegehäuses 30 befindet, und darin fixiert ist. Das Gebläsegehäuse wiederum ist an der rückwärtigen Wand des Getriebegehäuses 26 montiert.

Im Getriebegehäuse 26 ist außerdem eine Abtriebswelle 31 mit Zahnrad 33, das mit der Ritzelwelle 25 kraftschlüssig ist, untergebracht. An einem Ende der verlängerten Abtriebswelle 31 befindet sich eine Keilriemenscheibe 32, die durch einen Keilriemen mit dem (nicht dargestellten) Anlasser verbunden ist (Anlasserüberholkupplung).

Auf der Anlasserwelle befindet sich in an sich bekannter Weise eine zweite Keilriemenscheibe, die kraftschlüssig mit der Lichtmaschine verbunden ist.

Das Turbinengehäuse ist von einem doppelwandigen, als Wärmetauscher ausgebildeten Mantel 34 umgeben, der stirnseitig durch eine Wand 35 abgeschlossen ist. In dieser Wand 35 befinden sich die abgedichteten Ausnehmungen 36 für die elektronisch gesteuerten Einspritzdüsen 18, sowie für die Welle 9 der Rutschkupplung 10. Die Strömungsrichtung der Luft bis zur Brennkammer 1 ist mit gestrichelt eingezeichneten Pfeilen angegeben. Nach der Brennkammer 1 zeigen voll ausgezeichnete Pfeile die Strömungsrichtung an. Bei 37 tritt vorerst kalte Luft ein, die im Gegenstrom- und Gleichstromverfahren erwärmt, und nach Durchlauf durch die gesamte Gasturbine bei 38 austritt.

Der Wärmetauscher weist aber auch - in der Zeichnung nicht dargestellt - am Mantel abgedichtete und abisolierte Ausnehmungen auf, die für die Nachverbrennungskerzen (Glühkerzen), die in den Nachverbrennungsraum reichen, sowie für die Zünd- und Glühkerzen, die in die Brennkammer reichen, dienen.

Außerdem sind isolierte Ausnehmungen für Temperaturfühler, die elektronisch die Temperaturen des Turbinenistzustandes liefern und in weiterer Folge den Mikroprozeß mitbeeinflussen, angebracht.

An der hinteren Wand des Wärmetauschers befinden sich die Ausnehmungen der Auspuffanlage, über die gleichezeitig die Rohre, die vom Ladegebläse kommen und einen Teil des Wärmetauschers darstellen, durch Flansche befestigt sind.

Die Auspuffrohre 38 werden im Wärmetauscher weitergeführt und sind am vorderen Ende des Nachverbrennungsraumes angeflanscht.

Zu den verschiedenen Leitapparat-Laufrad-Kombinationen gemäß den Fig. 2 bis 6 wird folgendes ausgeführt:

Die Hauptfunktion dieser mit besonderen Schaufeln bestückten Anordnung von Leit- und Laufrad (auch mehrere möglich) liegt darin, daß es möglich ist, damit nicht nur das Druckgefälle zu verarbeiten, sondern auch nach erfolgten Abbau des durch den Verpuffungsvorgang erzeugten Überdruckes einen Nachsaugeffekt (Unterdruck) zu erzielen. Dies kann sowohl durch axiale als auch durch radiale bzw. halbradiale Schaufelräderkombinationen erfolgen.

Dadurch hervorgerufen wird:

1. Eine größere Wirkungsgradausnützung im Kreisprozeß.

2. Ein leichteres Füllen der Brennkammer, da der Saugeffekt positiv gegen den in der Brennkammer vorhandenen Hitzestau wirkt.

3. Ein konstantes Abbauen bis auf einen gewissen Unterdruck, womit die zwangslose Steuerung des Verbrennungsprozesses erst ermöglicht wird.

Fig. 2, Kombination a): Bei dieser Anordnung Leitapparat-Laufrad wird vorerst das vorhandene Druckgefälle, welches das Laufrad 20 in Rotation versetzt, verarbeitet. Nach Abbau des Gefälles ist jedoch dieses Laufrad durch spezielle Schaufelformgebung auch in der Lage, im Nachlaut zu saugen.

Fig. 3, Kombination b): Bei dieser Anordnung ist das erste Laufrad 20 als Gleichdruckrad, das zweite als Reaktionsrad ausgebildet, zwischengeschaltet ist jeweils ein Leitapparat 4. Die Laufräder befinden sich auf der gleichen Welle 25.

Fig. 4, Kombination c): Hier wird durch eine gegenläufige Anordnung der Laufräder 20, die aber ein Getriebe sowie eine Hohlwelle 39 benötigt, eine verstärkte Saugwirkung erzielt. Bevorzugt mit unterschiedlicher Schaufelanzahl der beiden unmittelbar aufeinanderfolgenden Laufräder 20.

Fig. 5, Kombination d). Durch die Anordnung des zweiten zwischengeschalteten Leitapparates bleibt der verstärkte Saugeffekt erhalten, die Konstruktion der Hohlwelle fällt dadurch weg.

Fig. 6, Kombination e): Durch Anordnung des zweiten zwischengeschalteten, als Gleichdruckleitapparat ausgeführten 2 Leitapparates 4 bleibt die durch das zweite Laufrad 20 verstärkte Saugwirkung erhalten. Die Hohlwelle fällt dadurch weg.

Nach dieser Erklärung von Ausführungsbeispielen wird zum Wesen der Erfindung allgemein weiterhin noch das folgende gesagt:

Bei der Art der Gasturbine gemäß der vorliegenden Erfindung handelt es sich um eine impulsgesteuerte Gasturbine mit annähernd isochorer Verbrennungscharakteristik. Die Impulssteuerung unterscheidet sich von den Steuerungen der herkömmlichen Gasturbinen und Verbrennungskraftmaschinen dadurch, daß sie nicht zwangsgesteuert wird. Hervorgerufen wird dies durch die beschriebenen Leitapparat-Laufrad-Kombinationen sowie durch ein speziell gesteuertes Einlaßsystem.

Außerdem erfolgt die Verdichtung der eingebrachten Luft im Inneren des Wärmetauschers und durch Bestreichen des Nachverbrennungsraumes stufenweise thermisch. Das Einbringen der Luft erfolgt, wie ebenfalls beschrieben, über ein Axial- bzw. Radialdruckgebläse (Verdichter), welches direkt oder indirekt über ein Getriebe angetrieben wird.

Das Einlaßsystem ist ein völlig neues und vorteilhaftes Steuerungssystem, um den Ablauf Laden der Brennkammer,

Einspritzung, Zündung und Verpuffung

sowie Nachsaugen (Unterdruckerzeugung) zwanglos in Millisekunden zu gewährleisten.

Das Einlaßsystem besteht aus einem an der Brennkammer stirnseitig angeschraubten Stator. Zwischen Stator und Brennkammer kann eine Scheibe rotierend bewegt werden. Diese Scheibe ist ebenso wie der Stator mit Schlitzen versehen. Die Schlitze haben die Funktion, die Luft in die Brennkammer einströmen zu lassen oder den Zufluß zu sperren.

Bei dieser rotierenden Ausführung ist die Scheibe durch eine Welle und Nutenscheibe mit einer Rutschkupplung verbunden. Die Verbindungselemente der Rutschkupplung zum Antriebsmotor bestehen aus der Nutenscheibe und dem Zahnrad mit Reibbelag. Das Zahnrad wird direkt durch die Turbine oder indirekt durch einen drehzahlregelbaren Elektromotor in Rotation versetzt. Über Zahnrad, Kupplung, Nutenscheibe und Welle dreht sich die vordere mit Schlitzen versehene Scheibe.

In dem Moment, wo sich die Schlitze der feststehenden und der sich drehenden Scheibe überdecken, kann die Luft in die Brennkammer einströmen. Durch die Dreh- bzw. Pendelbewegung des Antriebes verschiebt sich der Rotorschlitz zum Statorsteg. Sobald Schlitz und Steg übereinstimmen, ist die Brennkammer stirnseitig geschlossen und es kann das Einspritzen, Zünden sowie der Abbau des erzeugten Überdruckes über die Laufräder eingeleitet werden.

Die Einspritz- und Zündimpulse werden durch die Nutenscheibe ausgelöst. Die Auslösung dieser Impulse kann mechanisch, elektronisch, elektrisch, akustisch, pneumatisch, optisch oder durch Kombination untereinander erfolgen.

Zum Wärmetauscher und dem darin integrierten Nachverbrennungsraum: Es erfolgt ein Aufheizen der Luft im geschlossenen Wärmetauscher. Die erste Ausdehnung der Luft erfolgt durch ein Gegenstromprinzip zwischen eintretender Ladegebläseluft und austretender Auspuffluft direkt im Wärmetauscher.

Der Nachverbrennungsraum, welcher sich ebenfalls im Inneren des Wärmetauschers befindet, hat primär die Aufgabe, die speziell beim Startvorgang noch unverbrannten Restgase vollständig zu verbrennen. Im weiteren dient er dazu, bei dieser neuen Gasturbinenart die zweite Vorverdichtungsstufe zu bilden.

Durch ein Axial- bzw. Radialgebläse (Verdichter), das direkt oder indirekt über ein Getriebe angetrieben werden kann, wird die angesaugte Luft mit geringem Überdruck im Gegenstromprinzip über die Auspuffrohre in den Wärmetauscher geleitet. Dieses Gebläse ist mit einem nachgeschalteten Leitapparat ausgestattet, der die in dem Wärmetauscher und Nachverbrennungsraum vorhandene Luft als Art Sperrventil entgegenwirkt. Somit kann die Luft nur bei Öffnen der Ventilscheibe in die Brennkammer gelangen.

Die Erfindung betrifft also, wie schon gesagt, eine impulsgesteuerte Verbrennungsturbine mit annähernd isochorer Verbrennungscharakteristik, bei der eine Ventilscheibe der Brennkammer(n) vorgelagert ist, in der dann in periodischen, jedoch nicht zwangsgesteuerten Abständen Ladung, Verpuffung und Expansion des Treibmittels aufeinanderfolgen.

Die Aufladung der Brennkammer(n) mit Verbrennungsluft erfolgt einerseits durch den von dem speziell ausgeführten Laufrad (Laufräder) im Nachlauf erzeugten Unterdruck und andererseits durch den vom Gebläse erzeugten geringen Überdruck, der dann in weiterer Folge in drei Stufen (Wärmetauscher, Nachverbrennungsraum, Eintritt heiße Brennkammer) wesentlich höher vorverdichtet wird.

Nach erfolgter Einspritzung und Zündung bei gleichzeitigem Schließvorgang des nachstehend speziell angeführten Einlaßsystems, erfolgt die Expansion über die angeführte Leitrad-Laufradkombination(en).

Durch diese Erfindung sollen die Nachteile ähnlicher Konstruktionen behoben und die Funktionssicherheit sowie der Wirkungsgrad maßgeblich verbessert werden. Aus diesem Grunde ist bei der eingangs genannten Art von Verbrennungsturbine erfindungsmäßig vorgesehen, daß das Einlaßsystem, welches aus einem mit Schlitzen versehenen Stator und einer mit Schlitzen versehenen Ventilscheibe sowie einem direkt oder indirekt gekoppelten Antriebsaggregat samt Elektroniksteuerung besteht, eine zwangslose Steuerung im Millisekundenbereich gewährleistet.

Die zwangslose Steuerung, das heißt, das vorhandene Druckgefälle wird bis in einen Unterdruckbereich abgebaut, kann einerseits durch die Konstruktion der verstellbaren Rutschkupplung 10 in Kombination mit speziell entwickelter Elektronik erreicht werden. Die Rutschkupplung 10 ist mit dem Antriebsmotor 17 über ein Zahnrad 12 mit Reibbelag 13 verbunden. Das Zahnrad 12 kann direkt durch die Turbine oder indirekt durch einen drehzahlregelbaren Elektromotor in Rotation versetzt werden. Sobald die Explosion in der Brennkammer 1 erfolgt, wird die Ventilscheibe 8 auf den Stator 5 gedrückt und die Rutschkupplung 10 hiebei gelöst. Gleichzeitig läuft der Elektromotor 17 mit unverminderter Drehzahl weiter. Natürlich überdecken sich dabei die Schlitze der Ventilscheibe 8 mit den Statorstegen, da die Expansion des Treibmittels über die Laufräder erfolgen muß. Gesteuert wird dies durch die auf der gleichen Welle befindliche Nutenscheibe 14, welche die Impulse für die speziell entwickelte Elektronik liefert. Hat sich der erzeugte Überdruck über die Leitrad-Laufradkombination(en) (Fig. 2 bis 6) abgebaut, dann wird die Rutschkupplung 10 wiederum kraftschlüssig und die Schlitze von Stator 5 bzw. Ventilscheibe 8 überdecken sich, um wiederum Luft in die Brennkammer 1 zu lassen.

Durch die auf der gleichen Welle (wie die Ventilscheibe) befindliche Nutenscheibe ist es ebenfalls möglich, elektronisch die Einspritzung und Zündung auf den Zeitpunkt genau durchzuführen.

Im weiteren kann die zwangslose Steuerung dieser Turbinenart bei kleineren Ausführungen durch einen direkt mit der Ventilscheibe mit einer Welle verbundenen elektronisch gesteuerten Schrittmotor samt Nutenscheibe erfolgen. Die Nutenscheibe hat hier wiederum die Aufgabe, die Impulse für die Elektronik im absolut richtigen Moment und dies im Millisekundenbereich für die Einspritzung, Zündung sowie Öffnen und Schließen der Ventilscheibe zu liefern.

Eine wesentliche V. besserung gegenüber bekannten Verbrennungsturbinen und Verbrennungskraftmaschinen wird durch den Wärmetauscher und den darin integrierten Nachverbrennungsraum erzielt. Der Wärmetauscher liefert nicht nur die Regeneration für die in die Brennkammer einzubringende Luft, sondern darin wird auch die Verbrennungsluft kontinuierlich thermisch vorverdichtet. Das erste Mal geschieht dies zwischen eintretender Ladegebläseluft und austretender Auspuffluft im Gegenstrom- bzw. Gleichstromprinzip direkt im Wärmetauscher, die zweite Vorverdichtung über intensive Aufheizung der eingeschlossenen Luft durch Bestreichen des integrierten Nachverbrennungsraumes. Letzterer dient in weiterer Folge dazu, die beim Startvorgang noch unverbrauchten Restgase zu verbrennen. In apparativer Hinsicht erfolgt also eine zusätzliche Luftvorwärmung durch Bestreichen eines integrierten Nachverbrennungsraums für Auspuffgase durch die Ladegebläseluft.

Somit bietet diese erfindungsmäßig vorgesehene Wärmetauschervariante nicht nur eine Erhöhung des thermischen Wirkungsgrades durch Regeneration, sondern auch die Voraussetzung für das Einbringen entsprechender Verbrennungsluft in die Brennkammer, was wiederum für die Leistung sowie für den Gesamtwirkungsgrad dieser Turbine von Bedeutung ist. Durch den zwangslosen Druckabbau sowie den Nachverbrennungsraum wurde die Möglichkeit geschaffen, eine vollständige Verbrennung durchzuführen. Damit ist auch dem heutigen Anspruch der "Umweltfreundlichkeit" Rechnung getragen worden.

Bei dieser neuen Art von Gasturbine wird, wie bereits ausgeführt, ein Verpuffungsprozeß durch eine neuartige Anordnung von Leitapparat(en)/Laufrad(räder) sowie der Gassteuerung eszeugt. Durch einen Axial- oder Radialverdichter, welcher direkt oder indirekt über ein Getriebe angetrieben werden kann, wird Luft mit Überdruck durch den Wärmetauscher gepreßt. Durch die Erwärmung der Luft tritt eine thermische Verdichtung auf.

Diese heiße Luft wird dem Verbrennungsraum vorgelagert. Bei Öffnen der Ventilscheibe strömt diese durch den hier herrschenden Überdruck und den von den Laufrädern in der Brennkammer erzeugten Unterdruck, in die Brennkammer.

Durch Einspritzen von Treibstoff (Kerosin, Benzin, Petroleum, Dieselöl, Methanol, Äthanol, Erdgas und Gichtgas) mit darauffolgender Zündung expandiert dieses Gemisch.

Diese Expansion kann sich nur durch die Radkammer abbauen und versetzt somit die Laufräder in Rotation.

Das Einspritz- und Zündsystem kann mittels Elektronik, Elektrik, Mechanik oder in Verbindung dieser Systeme erfolgen.

Der Antrieb der Ventilscheibe erfolgt durch einen extern angebrachten Motor, kann aber auch von der Turbine erfolgen.

Die Ventilscheibe ist eine mit Öffnungen versehene Scheibe, die sich vor einer mit der Brennkammer verbundenen Scheibe, welche auch mit Öffnungen versehen ist, dreht. Verbunden ist die rotierende Scheibe mit dem Antrieb über eine Welle,-Kupplung,- und Zahnrad.

Natürlich können im Rahmen der Erfindung bei einer Gasturbine jeweils eine oder mehrere Brennkammern bzw. mehrere Einlaßsysteme vorgesehen sein sowie auch je eine oder mehrere Einspritzdüsen Verwendung finden.

**Patentansprüche**

1. Impulsgesteuerte Gasturbine, die mindestens eine mit Einspritzdüsen (18) versehene Brennkammer (1) aufweist, in der in periodischen Abständen elektronisch gesteuerte Ladung, Verbrennung und Expansion von Treibmittel aufeinander folgen, wobei durch eine Leitapparat-Laufrad-Kombination (4, 20) und ein gesteuertes und über einen Antrieb (17) betätigtes Einlaßsystem eine annähernd isochore Verbrennungscharakteristik gegeben ist, wobei gegenüber dem vor dem Einlaßsystem herrschenden Druck beim Ladevorgang ein Unterdruck in der Brennkammer (1) durch Drehung des Laufrades (28) erzeugt wird und das Treibmittel vor dem Einlaßsystem über ein Gebläse (30) und einen Wärmetauscher (34) eingebracht wird, dadurch gekennzeichnet, daß das Einlaßsystem eine mit Schlitzen (7) versehene Ventilscheibe (8) umfaßt, welche relativ zu einem mit Schlitzen (6) versehenen Stator (5) eingangs der Brennkammer (1) mit einer Welle (9) drehbar und axial abhebbar ist und daß zwischen dem Antrieb (17) und der Ventilscheibe (8) eine Rutschkupplung (10) vorgesehen ist, wobei bei Unterdruck in der Brennkammer (1) gegenüber dem vor dem Einlaßsystem herrschenden Druck Kraftschluß der Rutschkupplung (10) mit dem Antrieb (17) besteht und die Schlitze (7) der Ventilscheibe (8) mit den Schlitzen (6) des Stators (5) in Überdeckung gelangen und das Einlaßsystem zur Ladung der Brennkammer (1) geöffnet ist, wohingegen bei Überdruck in der Brennkammer (1) gegenüber dem vor dem Einlaßsystem herrschenden Druck die Ventilscheibe (8) gegen den Stator (5) gedrückt ist, wodurch die Rutschkupplung (10) gelöst ist und die Schlitze (7) der Ventilscheibe (8) mit den Stegen des Stators (5) zur Deckung gebracht sind, und daß die Steuerung über eine auf der gleichen Welle (9) befindliche Nutenscheibe (14) erfolgt, welche die Impulse turbinendrehzahlabhängig für eine den Einspritzzeitpunkt, die Einspritzdauer und den Zündzeitpunkt steuernde Elektronik liefert.

2. Gasturbine nach Anspruch 1, gekennzeichnet durch die folgenden Leitapparat - Laufrad - Kombinationen:

a) Leitapparat und Laufrad sind nacheinander angeordnet,

Leitapparat - Überdruckapparat, Laufrad - Reaktionsrad, das sowohl Druck verarbeiten als auch saugen kann (Fig. 2),

b) Leitapparat und Laufräder sind ineinandergeschachtelt, Leitapparate - Überdruckapparate, erstes Laufrad ist ein Drucklaufrad, zweites Laufrad ist ein Saugrad (Fig 3),

c) ein Leitapparat liegt vor zwei Laufrädern, die Laufräder sind Reaktionsräder, die sowohl Druck verarbeiten als auch saugen können, wobei ein Laufrad auf einer Hohlwelle vorgesehen ist, das zweite Laufrad ist jedoch mit weniger Schaufeln bestückt (Fig. 4),

d) wie Variation b), jedoch sind das erste und zweite Laufrad als Reaktionsräder ausgebildet, die sowohl Druck verarbeiten als auch saugen können (Fig. 5),

e) wie Variation d), jedoch ist der zweite Leitapparat als Gleichdruckleitapparat ausgebildet (Fig. 6).

3. Gasturbine nach einem der vorhergehenden Ansprüche, dadurch gekennzeichnet, daß das Gebläse in an sich bekannter Weise als Axial- oder Radial-Druckgebläse vorgesehen ist, das direkt oder indirekt über ein Getriebe antreibbar ist.

4. Gasturbine nach einem der vorhergehenden Ansprüche, dadurch gekennzeichnet, daß die Einspritzdüsen (18) an dem zum Einlaßsystem gehörenden Stator (5) angeordnet sind.

5. Gasturbine nach einem der vorhergehenden Ansprüche, dadurch gekennzeichnet, daß das Einleiten der Verbrennung in an sich bekannter Weise durch Zündkerzen oder Glühkerzen geschieht.

**Claims**

1. A pulse controlled gas turbine having at least one combustion chamber (1) provided with injection nozzles (18) wherein there follow each other at periodic intervals, an electronically controlled charge, combustion and the expansion of fuel, an approximately isochoric combustion characteristic being given by a guide means-rotor combination (4, 20) and a controlled intake system operated via a drive (17), low pressure being generated during the charging process in the combustion chamber (1) in relation to the pressure obtaining ahead of the intake system by the rotation of the rotor (28), and the fuel ahead of the intake system being taken in via a blower (30) and a heat exchanger (34), characterised in that the intake system comprises a valve disc (8) provided with slots (7) which is rotatable with a shaft (9) on the intake side of the combustion chamber (1) relative to a stator (5) provided with slots (6) and axially detachable, and that provision is made between the drive (17) and the valve disc (8) for a friction clutch (10), there occurring a frictional connection of the friction clutch (10) with the drive (17) during low pressure in the conbustion chamber (1) in relation to the pressure obtaining ahead of the intake system, and the slots (7) of the valve disc (8) coming to coincide with the slots (6) of the stator (5) and that the intake system is open for the charging of the combustion chamber (1), whereas during higher pressure in the combustion chamber (1) in relation to the pressure obtaining ahead of the intake system, the valve disc (8) is pushed against the stator (5) whereby the friction clutch (10) is released and the slots (7) of the valve disc (8) come to coincide with the webs of the stator (5) and that the controlling action is effected via a slotted disc (14) located on the same shaft (9) which supplies the pulses depending on the speed of rotation of the turbine to the electronic unit controlling the injection time, the injection period and the ignition timing.

2. A gas turbine according to claim 1, characterised by the following guide means - rotor combinations:

a) the guide means and rotor are arranged one after the other, guide means - high pressure device, rotor - reaction wheel which is capable of both converting pressure, and of suction (Figure 2),

b) the guide means and rotors are nested in each other, guide meanss - high pressure devices the first rotor is a pressure rotor, the second rotor is a suction wheel (Fig. 3),

c) one guide means lies ahead of two rotors, the rotors are reaction wheels which are both capable of converting pressure, and of suction, provision being made for one rotor on a hollow shaft, but the second rotor being provided with fewer blades (Fig. 4)

d) like variant b), the first and the second rotors, however, are designed as reaction wheels which are capable of both converting pressure and of suction (Fig. 5),

e) like variant d), the second guide means is, however, designed as an impulse type guide means (Fig.6)

3. A gas turbine according to one of the preceding Claims, characterised in that the blower is provided in a manner known per se, as an axial or radial compressor which can be driven directly or indirectly via a gear unit.

4. A gas turbine according to one of the preceding Claims, characterised in that the injection nozzles (18) are arranged on the stator (5) appertaining to the intake system.

5. A gas turbine according to one of the preceding Claims, characterised in that the starting of the combustion is effected- in a manner known per se by sparking plugs or glow plugs.

## Revendications

1. Turbine à gaz contrôlée par impulsions, comportant au moins une chambre de combustion (1) munie de gicleurs (18), dans laquelle le chargement, la combustion et l'expansion du carburant se succèdent à intervalles périodiques sous commande électronique, ou l'emploi d'une combinaison redresseur-rotor (4, 20) et d'un système d'admission commandé et actionné par un entraînement (17) permet d'obtenir une caractéristique de combustion approximativement isochore, où en opposition à la pression régnant avant le système d'admission une dépression se produit par rotation du rotor (28) dans la chambre de combustion (1) lors du processus de chargement, le carburant étant amené au système d'admission par l'intermédiaire d'un ventilateur (30) et d'un échangeur de chaleur (34), caractérisée par le fait que le système d'admission comporte un disque de soupape (8) muni de fentes (7), étant mobile sur un arbre (9) et levable axialement par rapport à un stator (5) muni de fentes (6) à l'entrée de la chambre de combustion (1) et qu'un accouplement patinant (10) est prévu entre l'entraînement (17) et le disque de soupape (8), en quoi, en présence d'une dépression dans la chambre de combustion (1) en opposition à la pression régnant avant le système d'admission il y a adhérence de l'accouplement patinant (10) avec l'entraînement (17), les fentes (7) du disque de soupape (8) s'alignen sur les fentes (6) du stator (5) et le système d'admission est ainsi ouvert pour le chargement de la chambre de combustion (1), en quoi au contraire en présence d'une surpression dans la chambre de combustion (1) en opposition à la pression régnant devant le système d'admission le disque de soupape (8) est pressé contre le stator (5), provoquant le desserrement de l'accouplement patinant (10) et le recouvrement des fentes (7) du disque de soupape (8) par les ailettes du stator (5), et par le fait que la commande se fait par l'intermédiaire d'un disque à rainures (14) se trouvant sur le même arbre (9), qui livre en fonction de la vitesse de rotation de la turbine les impulsions pour une éléctronique commandant le moment d'injection, la durée d'injection et le moment d'allumage.

2. Turbine à gaz selon revendication 1 caractérisée par les combinaisons redresseur-rotor suivantes:

a) redresseur et rotor sont disposés l'un après l'autre, redresseur- appareil de surpression, rotor-roue à réaction, pouvant à la fois convertir la pression et aspirer (fig. 2),

b) redresseur et rotors sont emboîtés, redresseur-appareil de surpression, le premier rotor est un rotor de pression, le deuxième rotor est un rotor d'aspiration (fig. 3),

c) un redresseur est placé devant deux rotors, les rotors sont des rotors à réaction pouvant à la fois convertir la pression et aspirer, en quoi un rotor est prévu sur an arbre creux, tandis que le deuxième rotor est muni de moins d'ailettes (fig. 4),

d) comme variation (b), mais le premier et le deuxième rotor sont développés comme roues à réaction pouvant à la fois convertir la pression et aspirer (fig. 5),

e) comme variation (d), mais le deuxième redresseur est développé comme redresseur à action (fig. 6).

3. Turbine à gaz selon une des revendications précédentes, caractérisée par le fait que le ventilateur est prévu de manière traditionelle comme ventilateur soufflant axial ou radial, entraînable directement ou indirectement par une transmission.

4. Turbine à gaz selon une des revendications précédentes, caractérisée par le fait que les gicleurs sont appliqués sur le stator appartenant au système d'admission.

5. Turbine à gaz selon une des revendications précédentes, caracterisée par le fait que le déclenchement de la combustion se fait de manière traditionelle à l'aide de bougies d'allumage ou de bougies à incandescence.

*Fig. 1*

Fig.2

Fig.3

Fig.4

Fig. 5

Fig. 6